Europäisches Patentamt

European Patent Office

Office européen des brevets

(11) Publication number: **0 335 163 B1**

## EUROPEAN PATENT SPECIFICATION

(45) Date of publication of patent specification: **25.05.94** (51) Int. Cl.⁵: **G01N 21/88**

(21) Application number: **89104483.6**

(22) Date of filing: **14.03.89**

(54) Apparatus for detecting foreign matter on the surface of a substrate.

(30) Priority: **28.03.88 JP 75415/88**

(43) Date of publication of application:
**04.10.89 Bulletin 89/40**

(45) Publication of the grant of the patent:
**25.05.94 Bulletin 94/21**

(84) Designated Contracting States:
**DE FR**

(56) References cited:
**DE-A- 3 714 305**
**JP-A- 1 172 737**
**JP-A-62 261 044**
**US-A- 4 482 250**

**PATENT ABSTRACTS OF JAPAN, vol. 12, no. 90 (P-679)[2937], 24th March 1988; & JP-A-62 223 649**

**PATENT ABSTRACTS OF JAPAN, vol. 10, no. 284 (P-501)[2340], 26th September 1986; & JP-A-61 104 243**

**IBM TECHNICAL DISCLOSURE BULLETIN, vol. 27, no. 10B, March 1985, pages 6273-6275, New York, US; "Patterned wafer scanner"**

**HITACHI REVIEW, vol. 35, no. 6, December 1986, pages 355-360, Tokyo, JP; M. KOIZUMI et al.: "Automated visual inspection technique for the detection of small contaminants in LSI manufacturing processes"**

**PATENT ABSTRACTS OF JAPAN, vol. 12, no. 90 (P-679)[2937], 24th March 1988; & JP-A-62 223 651**

(73) Proprietor: **HORIBA, LTD.**
**2 Miyanohigashi-machi**
**Kissyoin**
**Minami-ku Kyoto(JP)**

(72) Inventor: **Saijo, Yutaka**
**1-50, 1-chome**
**Sakae**
**Kumiyama-cho**
**Kuze-gun Kyoto(JP)**
Inventor: **Ishihara, Masaaki**
**B 42-103, 5-5, Furuedai**
**Suita-City Osaka(JP)**

(74) Representative: **TER MEER - MÜLLER - STEIN-MEISTER & PARTNER**
**Mauerkircherstrasse 45**
**D-81679 München (DE)**

EP 0 335 163 B1

## Description

The present invention relates to an apparatus for detecting foreign matter on the surface of a substrate. Such kind of apparatus is applied for inspecting substrates the surface of which carries a design pattern such as a printed circuit pattern, and for determining whether or not foreign matter is deposited on the surface of the substrate. For example, the substrate which is inspected in this way may be a reticle or mask used for printing a circuit pattern on a semiconductor wafer in the manufacturing process of LSI circuits and the like, or a substrate used in a liquid chrystal. Since a design pattern is provided on the surface of the substrate, the apparatus must be capable of distinguishing foreign matter from the design pattern.

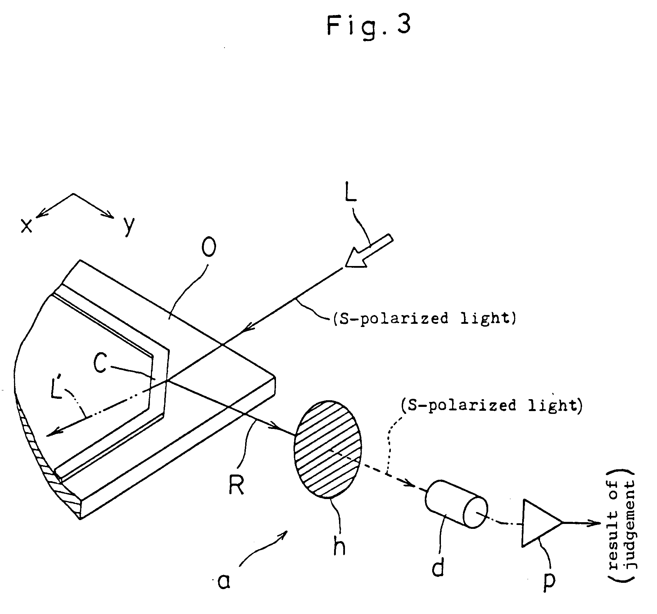

An example of a conventional apparatus of this type has the construction shown in figure 3.

A substrate O to be inspected carries a circuit pattern C on the surface thereof and is placed on a stage (not shown) which is moved in one direction (x-direction) on a horizontal plane, and simultaneously a laser beam L is incident on the surface of the substrate O, so that the substrate ist scanned in x-direction. The laser beam L is a beam of so-called S-polarized light, that is to say, the direction of polarization (the direction of the E-vector of the light wave) is oriented normal to the plane of incidence which is spanned by the incident beam L and the beam L' reflected at the undisturbed surface of the substrate. Accordingly, the direction of polarization of the laser beam L is parallel to the surface of the substrate O. This direction of polarization is indicated by an angle of polarization of O°. On the other hand, polarized light having an angle of polarization of 90°, i.e. a direction of polarization normal to the surface of the substrate O will be termed as P-polarized light hereinafter. The laser beam L is incident on the surface of the substrate obliquely from upside with an appointed angle of incidence and is generated by an incident optical system (not shown) comprising for example a He-Ne laser, a beam expander, a galvanomirror, a collecting lens and the like. The galvanomirror is used for reciprocal linear scanning of a predetermined range of the substrate O with the laser beam L in a direction y orthogonal to said x-direction. A detecting optical system $\underline{a}$ comprising an analyser (for example a polarizing plate) h, an optical detector (for example a photomultiplier tube) d and a preamplifier p is disposed obliquely upside of the surface plane of the substrate O and is laterally offset from the inspected surface area of the substrate in the direction y, so as to detect reflected scattered light R which results from scattering or reflection of the incident laser beam L at the surface to be inspected. The analyzer h transmits only a component of the reflected scattered light R which has a specified angle of polarization. In the present example, the analyzing axis of the analyzer is oriented so that only the S-polarized component of the reflected or scattered light R ist transmitted to the detector d.

The analyzer h in said detecting optical system $\underline{a}$ is provided for discriminating between reflected scattered light R resulting from portions of the circuit pattern C provided on the surface of the substrate O and reflected scattered light resulting from scattering of the incident beam at foreign matter.

In this description, the term "reflected scattered light" applies to light which is radiated from foreign matter at random into all directions and as well to light which is radiated from the circuit pattern mainly into a predetermined direction (corresponding to the angle of reflection).

If a circuit pattern having a pattern corner portion forming an angle of 45° relative to the laser beam L (herinafter referred to as 45° circuit pattern) is present on the inspected surface of the substrate O, the reflected scattered light R which is reflected toward the detecting optical system $\underline{a}$ by the 45° circuit pattern should theoretically consist substantially of polarized light having a specialized angle of polarization (in this example P-polarized light having an angle of polarization of 90°), so that, if the analyzing axis of the analyzer h is oriented at right angles with the direction of polarization of the reflected scattered light R (i.e. transmits only the S-polarized component in the present example), the reflected scattered beam R (of P-polarized light) is completely cut off by the analyzer h and cannot reach the optical detector d. Accordingly, in this case, the optical detector d does not detect any light and it is judged that no foreign matter exists on the surface of the substrate. On the other hand, in a case where foreign matter actually exists on the inspected surface of the substrate O, the reflected scattered light R scattered toward the detecting optical system $\underline{a}$ by the foreign matter comprises an S-polarized component as well as a P-polarized component, so that a part of the reflected scattered light R (i.e. the P-polarized component) is cut off, while the other part (i.e. the S-polarized component) passes through the analyzer h and reaches the optical detector d. Accordingly, in this case, the optical detector d detects light and delivers a detecting signal through the preamplifier p, whereby it is jugded that foreign matter is adhered to the surface of the substrate.

With an apparatus having the above described construction it should theoretically be possible to detect foreign matter adhered to the surface of the substrate and to avoid that any 45° circuit patterns or similar structures which may be present on the surface on the substrate are misdetected as foreign matter. However, in practice, a reliable discrimination between foreign matter and 45° circuit patterns cannot be achieved with this apparatus for reasons explained below.

With the apparatus shown in figure 3, a reliable discrimination between reflected scattered light R resulting from the 45° circuit pattern and the like and reflected scattered light resulting from foreign matter is possible only under the condition that the light resulting from the 45° circuit pattern does not include a substantial component with said specialized angle of polarization. However, detailed investigations by the present inventors have shown that the reflected scattered light R resulting from the 45° circuit pattern and the like ist not linearly polarized to 100 % but is elliptically polarized and accordingly includes a component (S-polarized component) which cannot be cut off by the analyzer h. As a consequence, the capacity of discriminating between the 45° circuit pattern and a foreign matter is limited.

This problem becomes increasingly important in connection with attempts to reduce the size of the structures of the circuit pattern and the maximum size of foreign matter that may be tolerated. On the one hand, the intensity of the reflected scattered light resulting from the foreign matter decreases with decreasing particle size of the foreign matter, while on the other hand the ratio of the S-polarized component to the P-polarized components in the reflected scattered light resulting from the 45° circuit pattern increases with decreasing size of the structure of the circuit pattern, so that it becomes more and more difficult to distinguish between light resulting from the 45° circuit pattern and light resulting from a foreign matter when the structural dimensions are decreased.

In order to overcome this problem, recently, a modified detecting optical system has been devised.

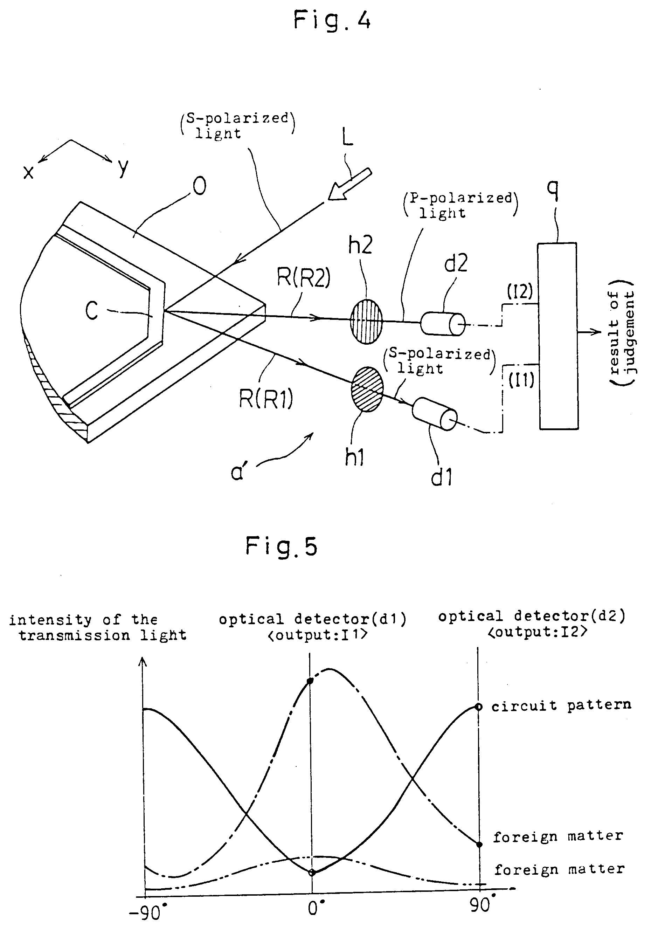

As is shown in figure 4, the improved detecting optical system a' comprises a first analyzer h1 for transmitting merely a component having a specialized angle of polarization in a beam R1 of reflected scattered light R reflected or scattered at the surface of the substrate O, a first optical detector d1 for detecting the intensity of the component which has passed through the first analyzer h1, a second analyzer h2 for transmitting merely a component having another specialized angle of polarization in another beam R2 of the reflected scattered light R reflected or scattered at the surface of the substrate, and a second optical detector d2 for detecting the intensity of the polarized light which has passed through the second analyzer h2. In the example shown in figure 4, the first analyzer h1 transmits only the S-polarized component having an angle of polarization of 0°, while the second analyzer h2 transmits only the P-polarized component having an angle of polarization of 90°.

In order to detect the existence of a foreign matter on the surface of the substrate O and to discriminate between the optical effects of foreign matter and 45° circuit patterns and the like, the ratio or difference between the intensities of the two polarized components detected by means of the first and second optical detectors d1 and d2 is measured by comparation means q.

The background of the discriminating method will be explained with reference to figure 5.

Figure 5 shows an experimental result of a measurement of the intensity of light transmitted through an analyzer (polarizing plate) the analyzing angle of which was changed from -90° to +90°. One of the curves shown in figure 5 represents the results for reflected scattered light from the 45° circuit pattern and the other curves show the result obtained for reflected scattered light resulting from two kinds of foreign matter. As is obvious from figure 5, the relations between the intensity of light and the set angle of the analyzer for light resulting from the 45° circuit pattern on the one hand and light resulting from foreign matter on the other hand are quite different from each other in tendency.

Specifically, the ratio K ( = I2/I1) of an output I2 detected by the second optical detector d2 and an output I1 detected by the first optical detector d1 in the detecting opticle system a' becomes K > 1 in the case of the reflected scattered light from the 45° circuit pattern and K < 1 in the case of the reflected scattered light from the foreign matter, and the difference I ( = I2 - I1) between the output I2 and the output I1 becomes I > 0 in the case of the reflected scattered light from the 45° circuit pattern and I < 0 in the case of the reflected scattered light from the foreign matter. As a consequence, the judgement of the existence of foreign matter on the substrate as well as the discrimination between the 45° circuit pattern and the foreign matter can reliably be achieved by comparing the output signals of the two optical detectors d1,d2 and evaluating the magnitude of their ratio or the sign of the difference between them.

However, it turned out in practice that even the discrimination between foreign matter and the 45° circuit pattern achieved with the improved detecting optical system a' was not sufficiently reliable. In some cases, the 45° circuit pattern was misjudged as foreign matter even though no foreign was actually present on the substrate. Conversely, in some other cases where foreign matter was adhered to the surface of the substrate, the foreign matter could not be detected. Thus, even in case of the apparatus having the improved detecting optical system a', the discrimination capacity is poor and the probability of missing foreign matter is relatively large.

JP-A 62-261 044 discloses an apparatus for detecting foreign matter on the surface of a substrate, which apparatus has the features indicated in the pre-characterizing part of claim 1. In this known apparatus, the S-polarized incident beam impinges onto the surface of the substrate obliquely from above, and the detecting optical system is arranged directly above the surface of a substrate and has an optical axis normal to said surface to be sensitive to light which is scattered by a foreign matter or reflected by the pattern in a direction normal to the surface of the substrate.

It is therefore an object of the present invention to improve the capacity of discriminating between undesired foreign matter adhered to the substrate and design patterns such as circuit patterns which are intentionally provided on the surface of the substrate and include 45° patterns, and to reduce the probability of missing foreign matter during optical inspection of the substrate.

The present inventors have found from their various kinds of investigations and considerations about reasons of the poor discriminating capacity and large probability of missing foreign matter in the conventional apparatus, that an important problem results from the fact that the two optical detectors d1 and d2 are installed separately and are sensitive to different beams R1 and R2 of the reflected scattered light R reflected and/or scattered from the substrate O. Due to an unevenness and irregular shape of the surface of the substrate, the directional distribution of the reflected scattered light R reflected and/or scattered at the surface of the substrate is not uniform. Moreover, the directional distribution is different for every substrate and even for every spot of the substrate on which the laser beam L is incident. Accordingly, with the optical detection system a' by which the intensities of two different beams R1,R2 are detected, the intensities of the beams R1 and R2 may vary in an unpredictable manner due to the uneven directional distribution of the reflected scattered light R, and these variations of the intensities which are independent of the direction of the direction of polarization give rise to errors such as mistaken discrimination or missing of foreign matter. For example, in a case where the light R is reflected and/or scattered by the 45° circuit pattern in such a manner that the light beam R1 incident upon the first optical detector d1 is relatively strong while the light beam R2 incident upon the second optical detector d2 is relatively weak, the comparison result may be $K \, (= I2/I1) < 1$ or $I \, (= I2 - I1) < 0$ indicating the presence of foreign matter, even though, actually, no foreign matter is present on the substrate and normally, if the directional distribution of the reflected scattered light were uniform, the result $K > 1$ or $I > 0$ would have been obtained. Conversely, in a case where the reflected scattered light R results from foreign matter, so that normally the relation $K < 1$ or $I < 0$ ought to hold good, the directional distribution of the reflected scattered light R may be such that the light beam R1 is relatively weak while the light beam R2 is relatively strong, so that the result actually obtained is $K > 1$ or $I < 0$, that is to say, the foreign matter is missed.

Based on the analysis of the reasons of the insufficient performance of the prior art device indicated above, it was found that the object of the invention can be achieved by an apparatus having the features specified in claim 1.

According to a fundamental concept of the invention, the optical detection system is arranged at right angles relative to the incident beam, when viewed in a direction normal to the surface of the substrate, and the optical detection system is so designed that the two components of the reflected scattered light which have different angles of polarization and the intensities of which are detected and compared to each other are taken from the same beam of reflected scattered light, so that errors due to uneven directional distribution of the reflected scattered light are avoided.

Preferably, a single beam of the reflected scattered light from the surface of the substrate is divided into two sub-beams by means of a beam splitter, and a first analyzer and a first optical detector are provided for detecting one of the polarized components in the first sub-beam, while a second analyzer and a second optical detector are provided for detecting the other polarized component in the second sub-beam. In this way, the intensities of the two polarized components contained in one and same beam of reflected scattered light can be detected simultaneously, and, even though the reflected scattered light may not be uniform and the intensity of said single beam my change, the two polarized components are changed in intensity in the same ratio, so that the changes in overall intensity of the light reflected or scattered toward the beam splitter has no meaningful influence on the comparison result.

Advantageous details of the apparatus according to invention are indicated in the dependent claims.

Preferred embodiments of the invention will be described below in conjunction with the drawing in which:

Fig. 1 is a schematic view showing principal parts of a preferred embodiment of the invention;

Fig. 2    is a schematic view showing principal parts of another embodiment of the invention,

Fig. 3    is a schematic view showing principal parts of a conventional apparatus for detecting foreign matter;

Fig. 4    is a schematic view showing principal parts of a modified example of the conventional apparatus; and

Fig. 5    is a diagram for explaining the function principle of the apparatus shown in figures 1, 2 and 4.

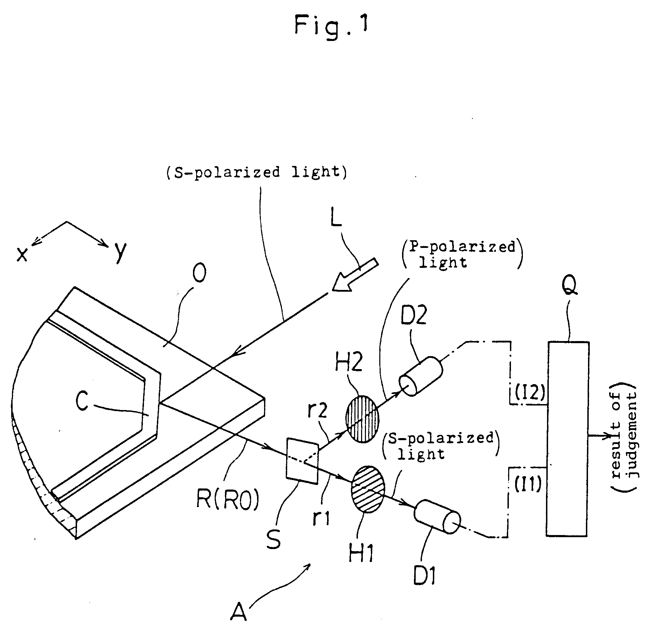

Figure 1 shows the fundamental construction of principal parts (mainly a detecting optical system A) of an apparatus for detecting foreign matter on the surface of a substrate O. Other usual constituent elements, for example a collecting lens, a slit member and the like, in the detecting optical system A are omitted in figure 1.

The substrate O is moved linearly on a horizontal plane in x-direction so as to be scanned y a laser beam L. A circuit pattern C is provided on the surface of the substrate to be inspected. The laser beam L is incident on the surface to be inspected obliquely from upside with an appointed angle of incidence and is scanned linearly and reciprocally within an appointed range in a direction y which is orthogonal to said x-direction. The light of the laser beam L is linearly polarized with a predetermant angle of polarization. In the present example, the laser beam L consists of S-polarized light having an angle of polarization of 0°. This means that the direction of polarization is normal to the plane of incidence and parallel to the surface of the substrate O. The detecting optical system A is disposed obliquely upside of the surface of the substrate O and is offset from the inspected area in the direction y. Thus, the detecting optical system A is arranged for detecting reflected scattered light R which results from scattering and/or reflection of the incident laser beam L on the surface of the substrate.

The detecting optical system A fundamentally comprises a beam splitter S which is formed for example by a half mirror or the like and is provided for dividing a specific beam R0 of the reflected scattered light R into two sub-beams r1 and r2, a first analyzer (for example a polarizing plate) H1 having a polarizing axis set so as to transmit merely a polarized component of the sub-beam r1, a first optical detector, such as a photomultiplier tube D1 for detecting the intensitiy of the polarized component transmitted through said first analyzer H1, a second analyzer (polarizing plate) H2 having a polarizing axis set so as to transmit merely a polarized component of the sub-beam flux r2, and a second optical detector, such as a photomultiplier tube D2 for detecting the intensity of the polarized component transmitted through said second analyzer H2. The angles of polarization of the first and second analyzers H1, H2 are set to different values. In the presend embodiment, the angle of polarization of the analyzer H1 is set to 0°, so that only the S-polarized component of the beam flux r1 is transmitted therethrough, while the angle of polarization of the analyzer H2 is set to 90°, so that is transmits only the so-called P-polarized component of the sub-beam flux r2. The direction of polarisation of the P-polarized component is parallel with the plane of incidence of the laser beam L and orthogonal to the surface of the substrate O and to the direction of polarization of the S-polarized component.

The circuit pattern C comprises a portion which is inclined at an angle of 45° with respect to the plane of incidence of the laser beam L. This portion will be termed 45° circuit pattern hereinafter and is capable of reflecting a part of the incident laser beam toward the beam splitter S. The judgement of the existence of foreign matter on the surface of the substrate O and the discrimination between the optical effects of the foreign matter and the 45° circuit pattern can be surely achieved by measuring the ratio (or difference) between the intensities I1 and I2 of the polarized components detected by the two optical detectors D1 and D2. This ratio or difference is measured by comparison means Q. It has been experimentally confirmed that in the case where no foreign matter is present on the surface of the substrate, so that the beam R0 (r1,r2) results only from the 45° circuit pattern or a similar structure, the ratio K (= I2/I1) of the output I2 of the second opticle detector D2 to the output I1 of the first optical detector D1 is usually in the range of approximately 2 to 10. Accordingly, the effect of the 45° circuit pattern and similar structures can be reliably distinguished from the optical effect caused by foreign matter adhered to the surface of the substrate.

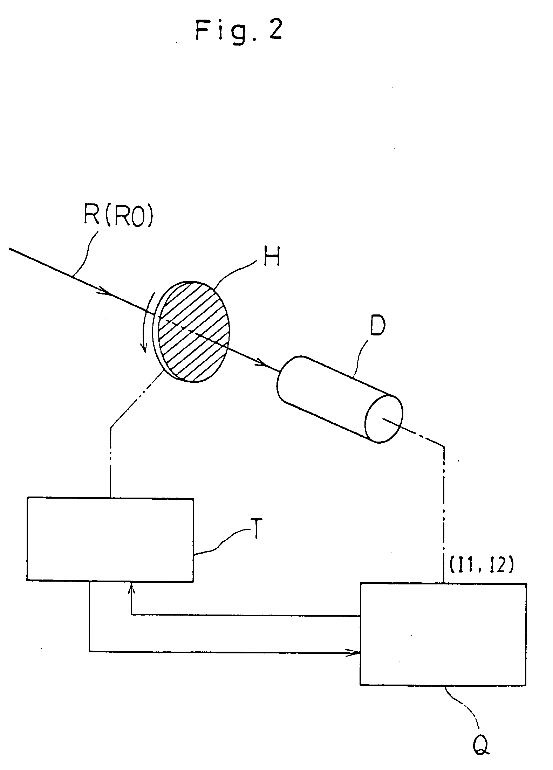

Figure 2 shows a modified example of the apparatus according to the invention, in which only one set of an analyzer H and an optical detector D is provided for analyzing the beam R0 and a controller T is provided for controlling the angle of rotation of the analyzer H in synchronism with the measurements carried out by the comparison means Q, so that the output of the optical detector D detected during a time interval where the analyzer H is set to a first angle of polarization (for example 0°) may be compared to the output of the same detector D during another time interval where the analyzer H is set to a different angle of polarisation (for example 90°). However, although the capacity of discriminating between the circuit pattern and the foreign matter can be improved and the probability of missing the foreign matter can be reduced in almost the same manner as in case of the previously described preferred embodiment, the apparatus according to figure 2 may entail problems in that, for example, a complicated mechanical driving mechanism is required, the throughput is inferior, a slight shift is brought about in the detection timing of the intensities of the two polarized components having different angles of polarization, and the like.

Therefore, in the preferred embodiment of the invention, a single beam R0 of reflected scattered light from the surface of the substrate is divided into two sub-beams r1,r2 by means of the beam splitter S, and the intensities of the two polarized components having different angles of polarization are measured simultaneously by means of two sets of analyzers and detectors.

## Claims

1. An apparatus for detecting foreign matter on the surface of a substrate (O) carrying a design pattern (C) on the surface to be inspected, comprising means for scanning the surface of the substrate with a polarized laser beam (L), said laser beam being incident on the surface of the substrate obliquely from above in a first direction (x), a detecting optical system (A) for detecting the intensities (I1,I2) of two polarized components of light (R) reflected and/or scattered from the surface of the substrate, said polarized components having different angles of polarization, and means (S,H1,H2; T,H) for extracting said two polarized components from a single beam (R0) of the light (R) scattered and/or reflected from the surface of the substrate, wherein the existence of foreign matter on the surface of the substrate is discriminated on the basis of the result of a comparison of the intensities of the two polarized components, **characterized** in that said detecting optical system (A) is arranged to be sensitive to a beam (R0) which is scattered and/or reflected at the surface of the substrate obliquely upwardly in a second direction (Y) orthogonal to said first direction (x) when viewed in a direction normal to the substrate.

2. An apparatus as set forth in Claim 1, wherein said extracting means comprise a beam splitter (S) for dividing said single beam (R0) into two sub-beams (r1,r2), a first analyzer (H1) provided in the path of one of said sub-beams (r1) for transmitting one of said polarized components to a first optical detector (D1), and a second analyzer (H2) provided in the path of the other sub-beam (r2) for transmitting the other polarized component to a second optical detector (D2).

3. An apparatus as set forth in Claim 2, wherein said beam splitter (S) is a half mirror, each of said first and second analyzers (H1,H2) is formed by a polarizing plate, and said first and second optical detectors (D1,D2) are photomultiplier tubes.

4. An apparatus as set forth in Claim 2 or 3, in which the respective analyzing axes of said first and second analyzers (H1,H2) are set so that one of said first and second analyzers transmits merely an S-polarized component having an angle of polarization of 0° with respect to the surface of the substrate and the other analyzer merely transmits a P-polarized component having an angle of polarization of 90°.

## Patentansprüche

1. Vorrichtung zum Nachweis von Fremdmaterial auf der Oberfläche eines Substrats (O), das auf der zu untersuchenden Oberfläche eine planmäßige Struktur (C) trägt, mit Mitteln zum Abtasten der Oberfläche des Substrats mit einem polarisierten Laserstrahl (L), der schräg von oben in einer ersten Richtung (x) auf die Oberfläche des Substrats auftrifft, einem optischen Nachweissystem (A) zum Erfassen der Intensitäten (I1, I2) von zwei Polarisationskomponenten des an der Oberfläche des Substrats reflektierten und/oder gestreuten Lichts (R), welche Polarisationskomponenten unterschiedliche Polarisationswinkel besitzen, und Mitteln (S, H1, H2; T, H) zum Extrahieren der beiden Polarisationskomponenten aus einem einzigen Strahl (R0) des an der Oberfläche des Substrats gestreuten und/oder reflektierten Lichts (R), wobei das Vorhandensein von Fremdmaterial auf der Oberfläche des Substrats auf der Grundlage des Ergebnisses eines Vergleichs der Intensitäten der beiden Polarisationskomponenten unterschieden wird, dadurch **gekennzeichnet**, daß das optische Nachweissystem (A) so angeordnet ist, daß es für einen Strahl (R0) empfindlich ist, der an der Oberfläche des Substrats schräg nach oben in einer zweiten Richtung (y) gestreut und/oder reflektiert wird, die, senkrecht zu dem Substrat gesehen, zu der ersten Richtung (x) orthogonal ist.

2. Vorrichtung nach Anspruch 1, bei der die Extrahiermittel einen Strahlteiler (S) zum Aufteilen des einzigen Strahls (R0) in zwei Teilstrahlen (r1, r2), einen im Weg eines der Teilstrahlen (r1) angeordneten ersten Analysator (H1) zum Durchlassen einer der Polarisationskomponenten zu einem ersten optischen Detektor (D1) und einen im Weg des anderen Teilstrahls (r2) angeordneten zweiten Analysator (H2) zum Durchlassen der anderen Polarisationskomponente zu einem zweiten optischen Detektor (D2) umfassen.

3. Vorrichtung nach Anspruch 2, bei der der Strahlteiler (S) ein Halbspiegel ist, jeder der ersten und zweiten Analysatoren (H1, H2) durch eine Polarisationsplatte gebildet wird und die ersten und zweiten optischen Detektoren (D1, D2) Elektronenvervielfacher-Röhren sind.

4. Vorrichtung nach Anspruch 2 oder 3, bei der die jeweiligen Analysatorachsen der ersten und zweiten Analysatoren (H1, H2) so eingestellt sind, daß einer der ersten und zweiten Analysatoren nur eine S-polarisierte Komponente mit einem Polarisationswinkel von 0° in bezug auf die Oberfläche des Substrats durchläßt und der andere Analysator nur eine P-polarisierte Komponente mit einem Polarisationswinkel von 90° durchläßt.

**Revendications**

1. Dispositif de détection de corps étrangers sur la surface d'un substrat (O) portant un motif dessiné (C) sur la surface à inspecter, comprenant un moyen pour balayer la surface du substrat avec un faisceau laser polarisé (L), ledit faisceau laser tombant obliquement de dessus dans une première direction (x) sur la surface sur substrat, un système de détection optique (A) pour détecter l'intensité (I1, I2) de deux composantes polarisées de lumière (R) réfléchie et/ou dispersée depuis la surface du substrat, lesdites composantes polarisées ayant des angles de polarisation différents, et des moyens (S, H1, H2; T, H) pour extraire lesdites deux composantes polarisées d'un seul faisceau (R0) de la lumière (R) dispersée et/ou réfléchie depuis la surface du substrat, dans lequel l'existence de corps étrangers sur la surface du substrat est distinguée d'après le résultat d'une comparaison de l'intensité des deux composantes polarisées, **caractérisé** en ce que ledit système de détection optique (A) est conçu pour être sensible à un faisceau (R0) qui est dispersé et/ou réfléchi obliquement vers le haut à la surface du substrat, dans une seconde direction (y) perpendiculaire à ladite première direction (x), vue dans une direction normale au substrat.

2. Dispositif selon la revendication 1, dans lequel lesdits moyens d'extraction comprennent un diviseur (S) de faisceau pour diviser ledit faisceau unique (R0) en deux faisceaux secondaires (r1, r2), un premier analyseur (H1) disposé sur la parcours d'un desdits faisceaux secondaires (r1) pour transmettre une desdites composantes polarisées à un premier détecteur optique (D1), et un second analyseur (H2) disposé sur le parcours de l'autre faisceau secondaire (r2) pour transmettre l'autre composante polarisée à un second détecteur optique (D2).

3. Dispositif selon la revendication 2, dans lequel ledit diviseur (S) de faisceau est un demi-miroir, chacun desdits premier et second analyseurs (H1, H2) est formé par une plaque polarisante et lesdits premier et second détecteurs optiques (D1, D2) sont des tubes photomultiplicateurs.

4. Dispositif selon la revendication 2 ou 3, dans lequel les axes d'analyse respectifs desdits premier et second analyseurs (H1, H2) sont établis de façon qu'un desdits premier et second analyseurs transmette seulement une composante à polarisation S ayant un angle de polarisation de 0° par rapport à la surface du substrat et que l'autre analyseur transmette seulement une composante à polarisation P ayant un angle de polarisation de 90°.

# Fig.1

(S-polarized light)

L

(P-polarized light)

x y

O

Q

D2

H2

C

r2

(S-polarized light)

(I2)

(result of judgement)

R(R0)

S

r1

(I1)

H1

D1

A

## Fig. 2

# Fig. 3

x ← → y

L

O

(S-polarized light)

C

L′

R

(S-polarized light)

h

a

d

p

(result of judgement)

## Fig. 4

## Fig. 5